# EUROPÄISCHE PATENTANMELDUNG

(11) **EP 1 246 286 A1**
(43) Veröffentlichungstag der Anmeldung: **02.10.2002**
(21) Anmeldenummer: 01108230.2
(22) Anmeldetag: 31.03.2001
(51) Int. Cl.: H01M 8/06

(54) **Kombinierte Kraft- Wärmeanlage mit Gaserzeugungssystem und Brennstoffzellen sowie Verfahren zu ihrem Betrieb**

(71) Anmelder: OMG AG & Co. KG, 63457 Hanau (DE)
(72) Erfinder: Baumann, Frank Dr., 63755 Alzenau (DE); Wieland, Stefan Dr., 63069 Offenbach (DE); Britz, Peter Dr., 35108 Allendorf (DE); Heikrodt, Klaus Dr., 35108 Allendorf (DE)
(74) Vertreter: Herrmann, Reinhard, Dr.

(57) **Zusammenfassung**

Die Erfindung betrifft eine kombinierte Kraft- Wärmeanlage mit integriertem Gaserzeugungssystem. Die kombinierte Kraft- Wärmeanlage enthält einen mit einem Gasbrenner beheizten Dampfreformer, der ein Gemisch aus Kohlenwasserstoffen und Wasserdampf in ein Wasserstoff und Kohlenmonoxid enthaltenden Reformatgasstrom überführt. Zur Entfernung von Kohlenmonoxid aus dem Reformatgasstrom enthält die Anlage ein mehrere Stufen umfassendes Reaktorsystem. Weiterhin enthält die Anlage einen Wärmetauscher zur Auskopplung von Wärmeenergie aus dem Reformatgasstrom sowie eine Brennstoffzellenanlage zur Erzeugung elektrischer Energie durch katalytische Umsetzung des im Reformatgas enthaltenen Wasserstoffs mit Sauerstoff in den Brennstoffzellen, wobei der Reformatgasstrom den Anoden der Brennstoffzellenanlage zugeführt und das Anodenabgas über eine Gasleitung dem Gasbrenner als Brennstoff zugeführt wird. Das Reaktorsystem zur Entfernung von Kohlenmonoxid aus dem Reformatgasstrom enthält erfindungsgemäß einen Niedertemperatur-Shiftreaktor und einen nachgeschalteten Methanisierungsreaktor und der Wärmetauscher zur Kühlung des den Dampfreformer verlassenden Reformatgasstromes auf die Eingangstemperatur des Niedertemperatur-Shiftreaktors ist im Reformatgasstrom zwischen Dampfreformer und Niedertemperatur-Shiftreaktor angeordnet. Diese kombinierte Kraft- Wärmeanlage wird effindungsgemäß so betrieben, daß das Reformatgas 5 bis 10 Vol.-% nicht reformierte Kohlenwasserstoffe enthält, die bei Verbrennung des Anodenabgases im Gasbrenner des Dampfreformers es ermöglichen, die Flamme des Gasbrenners mit einem Ionisationsdetektor zu überwachen.

## Beschreibung

Die vorliegende Erfindung beschreibt eine kombinierte Kraft- Wärmeanlage mit integriertem Gaserzeugungssystem sowie ein Verfahren zu ihrem Betrieb. Die Kraft- Wärmeanlage enthält eine Brennstoffzellenanlage zur Erzeugung von elektrischer Energie. Als Energieträger wird Erdgas eingesetzt, welches durch Dampfreformierung in ein Wasserstoff enthaltendes Brenngas für die Brennstoffzellenanlage überführt wird. Der Wärmeinhalt des Reformatgases wird zum Teil als Nutzwärme zum Beispiel zur Beheizung von Gebäuden benutzt. Mit dem Anodenabgas der Brennstoffzellenanlage wird der Dampfreformer beheizt.

Der für den Betrieb einer Brennstoffzellenanlage benötigte Wasserstoff kann in einem vorgeschalteten Gaserzeugungssystem durch sogenannte Reformierung von Kohlenwasserstoffen gewonnen werden. Die Dampfreformierung von Kohlenwasserstoffen zur Herstellung von Wasserstoff ist ein bekannter Prozess. Gemäß Gleichung (1) bildet sich dabei ein Reformatgas, welches Wasserstoff und Kohlenmonoxid enthält.

Dampfreformierung CH₄ + H₂O → 3 H₂ + CO (1)

Die Dampfreformierung gemäß Gleichung (1) wird gewöhnlich so geführt, daß das Methan möglichst vollständig umgesetzt wird. Dies erfordert hohe Arbeitstemperaturen des Dampfreformers zwischen 700 und 800 °C.

Das im Reformatgas enthaltene Kohlenmonoxid ist ein starkes Katalysatorgift für die Anodenkatalysatoren von Brennstoffzellen und muß daher möglichst weitgehend entfernt werden. Das im Reformatgas enthaltene Kohlenmonoxid wird daher in der Regel mit Wasser gemäß Gleichung (2) zu Wasserstoff und Kohlenmonoxid umgesetzt (Wassergas-Shiftreaktion).

Wassergas-Shiftreaktion CO + H₂O → H₂ + CO₂ (2)

Zur möglichst vollständigen Umsetzung des Kohlenmonoxids werden häufig zwei Shiftreaktionen vorgenommen. Eine Hochtemperatur-Shiftreaktion bei Temperaturen zwischen 350 und 450 °C und eine Niedertemperatur-Shiftreaktion bei Temperaturen zwischen 180 und 250 °C. Die Kühlung des Reformatgases vor Eintritt in die Shiftreaktoren auf die jeweiligen Arbeitstemperaturen wird mit Hilfe von Wärmetauschern vorgenommen. Die dem Reformatgas entzogene Wärme kann für die Beheizung von Gebäuden genutzt werden.

Mit Hilfe der Shiftreaktionen kann der Gehalt des Reformatgases an Kohlenmonoxid jedoch nur auf die bei der jeweiligen Reaktionstemperatur gültige Gleichgewichtskonzentration vermindert werden. Sie beträgt bei der Niedertemperatur-Shiftreaktion mit einer Arbeitstemperatur im Bereich von 180 bis 250 °C etwa 0,5 Vol.-%. Auch dieser Gehalt an Kohlenmonoxid ist noch zu hoch und muß weiter auf möglichst unter 100, besser unter 50 Vol.-ppm, vermindert werden. Gewöhnlich wird hierfür die selektive Oxidation von Kohlenmonoxid zu Kohlendioxid an geeigneten Katalysatoren eingesetzt. Die selektive Oxidation wird auch als präferentielle Oxidation, Abkürzung PROX, bezeichnet. Hierbei besteht die Gefahr, daß wegen ungenügender Selektivität auch ein gewisser Teil des Wasserstoffs zu Wasser oxidiert wird und somit nicht mehr als Brenngas für die Brennstoffzelle zur Verfügung steht. Alternativ besteht die Möglichkeit, das Kohlenmonoxid mit dem Wasserstoff des Reformatgases entsprechend Gleichung (3) zu Methan umzusetzen (Methanisierung). Im Unterschied zur präferentiellen Oxidation ist die Methanisierung von Kohlenmonoxid inhärent mit dem Verbrauch von Wasserstoff verbunden.

Methanisierung 3 H₂ + CO → CH₄ + H₂O (3)

Brennstoffzellen mit vorgeschaltetem Gaserzeugungssystem werden für die Versorgung von Gebäuden mit elektrischem Strom und Wärme eingesetzt. Im Rahmen dieser Erfindung wird ein solches System als kombinierte Kraft- Wärmeanlage bezeichnet.

Der im Brenngas für die Brennstoffzelle enthaltene Wasserstoff wird an der Anode der Brennstoffzellen nicht vollständig umgesetzt. Etwa 20 Vol.-% des der Brennstoffzelle zugeführten Wasserstoffs verlassen die Brennstoffzellenanlage mit dem Anodenabgas. Um die eingesetzten Primärenergieträger, wie zum Beispiel Erdgas, möglichst effizient auszunutzen, wird der nicht umgesetzte Wasserstoff im Anodenabgas der Brennstoffzelle gewöhnlich zur Beheizung des Dampfreformers auf seine Arbeitstemperatur in einem Gasbrenner verbrannt.

Gasbrenner unterliegen strengen Sicherheitsvorschriften. So muß der Gasbrenner durch Überwachung der Brennerflamme eine rasche Notabschaltung der Brennstoffzufuhr bei Verlöschen der Brennerflamme gewährleisten. Zur Überwachung der Brennerflamme werden Ionisationsdetektoren eingesetzt, die jedoch für eine störungsfreie Funktion einen Mindestanteil von Kohlenwasserstoffen im zugeführten Brennstoff benötigen. Bei Betrieb eines Brenners mit reinem Wasserstoff werden nicht genügend Ionen in der Flamme erzeugt, die für den Detektor notwendig sind. Die Verbrennung des Anodenabgases im Gasbrenner des Dampfreformers bereitet daher bei den aus dem Stand der Technik bekannten Anlagen der beschriebenen Art erhebliche Probleme bei der Überwachung des Brenners.

Es war daher Aufgabe der vorliegenden Erfindung, eine kombinierte Kraft- Wärmeanlage anzugeben, welche so betrieben werden kann, daß damit die genannten Sicherheitsvorschriften eingehalten werden.

Diese Aufgabe wird durch eine Anlage gemäß Patentanspruch 1 gelöst. Vorteilhafte Ausführungsformen sind in den Unteransprüchen 2 bis 4 angegeben. Anspruch 5 beschreibt ein Verfahren zum Betreiben der Anlage unter Einhaltung der genannten Sicherheitsvorschriften.

Die erfindungsgemäße Kraft- Wärmeanlage verwendet zur Entfernung von Kohlenmonoxid aus dem Reformatgasstrom des Dampfreformers nur einen Niedertemperatur-Shiftreaktor und einen nachgeschalteten Methanisierungsreaktor, wobei zwischen Dampfreformer und Niedertemperatur-Shiftreaktor ein Wärmetauscher zur Kühlung des Reformatgases und Auskopplung der Wärmeenergie angeordnet ist. Insgesamt ist die erfindungsgemäße Anordnung wesentlich einfacher und kostengünstiger aufgebaut als bekannte Anlagen aus dem Stand der Technik. Der Methanisierungsreaktor übernimmt die Entfernung des restlichen Kohlenmonoxids aus dem Reformatgas auf die erforderliche Restkonzentration von unter 100 Vol.-ppm. Ein Methanisierungsreaktor ist wesentlich einfacher aufgebaut und kann einfacher betrieben werden als die üblicherweise eingesetzten PROX-Reaktoren, die eine aufwendige und präzise Steuerung der Luftzuführ für die selektive Oxidation von Kohlenmonoxid benötigen.

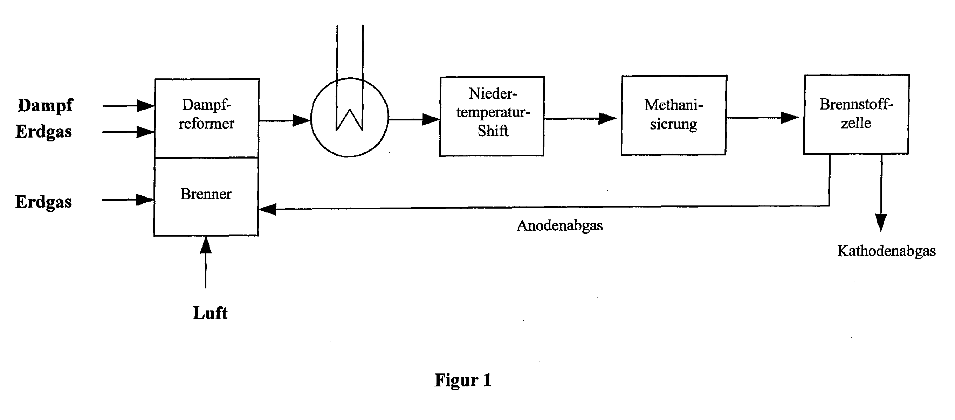

Die Erfindung wird an Hand der Figur 1 näher erläutert.

Die beschriebene Kraft- Wärmeanlage wird erfindungsgemäß so betrieben, daß im Reformatgas und demzufolge auch im Anodenabgas noch eine so hohe Konzentration von Methan enthalten ist, die eine ausreichende Erzeugung von Ionisationsprodukten bei der Verbrennung im Gasbrenner des Dampfreformers gewährleisten, so daß das Vorhandensein der Flamme mit Hilfe eines Ionisationsdetektor sicher nachgewiesen werden kann.

Im einzelnen wird die Kraft- Wärmeanlage wie folgt betrieben: Als Primärenergieträger wird Erdgas eingesetzt, welches im wesentlichen aus Methan besteht. Ein Gemisch aus Erdgas und Wasserdampf wird im Dampfreformer durch Teilreformierung in ein Wasserstoff, Kohlenmonoxid und Methan enthaltendes Reformatgas überführt. Dieses Reformatgas wird nach Abkühlung im Wärmetauscher im Niedertemperatur-Shiftreaktor zur Verminderung des Kohlenmonoxidgehaltes des Reformatgases auf weniger als 0,5 Vol.-% behandelt. Anschließend wird der verbleibende Gehalt des Reformatgases an Kohlenmonoxid im Methanisierungsreaktor auf eine restliche Konzentration von weniger als 100 Vol.-ppm vermindert. Das resultierende Produktgas wird als Brenngas der Brennstoffzellenanlage zugeführt. Das Anodenabgas der Brennstoffzellenanlage dient wiederum als Brennstoff für den Gasbrenner des Dampfreformers.

Bevorzugt wird die Teilreformierung des Erdgas/Wasserdampf-Gemisches im Dampfreformer durch Anpassen der Arbeitstemperatur des Dampfreformers so geführt, daß das Reformatgas noch wenigstens 5 bis 10 Vol.-% Methan enthält. Dieser Methangehalt kann durch entsprechende Herabsetzung der Arbeitstemperatur des Dampfreformers auf Werte zwischen etwa 650 und 750 °C gewährleistet werden. Auf Grund der Teilreformierung ist der Gehalt des Reformates an Kohlenmonoxid geringer als bei einer vollständigen Reformierung, so daß eine nachgeschaltete Niedertemperatur-Shiftreaktion ausreichend ist, um die Konzentration des Kohlenmonoxids im Reformatgas unter 0,5 Vol.-% zu senken. Bei vollständiger Reformierung des Erdgas/Wasserdampf-Gemisches enthält das Reformat etwa 10 Vol.-% Kohlenmonoxid. Das gemäß der Erfindung nur zum Teil reformierte Gasgemisch enthält weniger als 5 Vol.-% Kohlenmonoxid.

Das Reformatgas verläßt den Dampfreformer mit einer Temperatur von etwa 650 °C und muß vor Eintritt in den Shiftreaktor mit Hilfe des Wärmetauschers auf die Eingangstemperatur des Shiftreaktors von 180 bis 250 °C abgekühlt werden.

Nach Verlassen des Shiftreaktors enthält das Reformatgas noch eine Konzentration an Kohlenmonoxid, die etwa der Gleichgewichtskonzentration bei der Arbeitstemperatur des Shiftreaktors entspricht. Sie liegt bei den genannten Temperaturen unter 0,5 Vol.-%. Zur weiteren Verminderung des Kohlenmonoxidgehaltes wird erfindungsgemäß eine Methanisierungsreaktion eingesetzt, die zwar zu Lasten des Wasserstoffgehaltes des Reformates geht, jedoch wesentlich einfacher zu führen ist als die präferentielle Oxidation. Außerdem wird das hierbei zusätzlich erzeugte Methan mit dem Anodenabgas zum Brenner des Dampfreformers geführt und dort unter Zufuhr von Luft verbrannt.

Gemäß dem vorgeschlagenen Verfahren enthält das als Brennstoff zum Gasbrenner des Dampfreformers zurückgeführte Anodenabgas einen so hohen Methangehalt, daß mit einem Ionisationsdetektor das Vorhandensein der Flamme eindeutig festgestellt werden kann.

Das vorgeschlagene Verfahren beschreibt den Dauerbetrieb der Kraft- Wärmeanlage. Bei Anfahren der Anlage wird der Gasbrenner des Dampfreformers zunächst mit externem Erdgas und Luft betrieben. Erst nach Erreichen der Betriebstemperatur der Anlage kann die externe Versorgung des Gasbrenners mit Erdgas abgeschaltet und der Gasbrenner ausschließlich mit dem Anodenabgas der Brennstoffzellenanlage betrieben werden. Während der Anfahrphase ist die Sicherheit der Brennerüberwachung mittels Ionisationsdetektor durch den Betrieb des Brenners mit externem Erdgas gewährleistet. Aber auch der ausschließliche Brennerbetrieb mit Anodenabgas ist inhärent sicher, da das Anodenabgas durch die Verfahrensführung zwangsläufig einen ausreichenden Gehalt an Methan enthält.

## Patentansprüche

1. Kombinierte Kraft- Wärmeanlage mit integriertem Gaserzeugungssystem enthaltend einen mit einem Gasbrenner beheizten Dampfreformer, der ein Gemisch aus Kohlenwasserstoffen und Wasserdampf in ein Wasserstoff und Kohlenmonoxid enthaltenden Reformatgasstrom überführt, ein mehrere Stufen umfassendes Reaktorsystem zur Entfernung von Kohlenmonoxid aus dem Reformatgasstrom, einen Wärmetauscher zur Auskopplung von Wärmeenergie aus dem Reformatgasstrom sowie eine Brennstoffzellenanlage zur Erzeugung elektrischer Energie durch katalytische Umsetzung des im Reformatgas enthaltenen Wasserstoffs mit Sauerstoff in den Brennstoffzellen, wobei der Reformatgasstrom den Anoden der Brennstoffzellenanlage zugeführt und das Anodenabgas über eine Gasleitung dem Gasbrenner als Brennstoff zugeführt wird,
**dadurch gekennzeichnet, daß** das Reaktorsystem zur Entfernung von Kohlenmonoxid aus dem Reformatgasstrom einen Niedertemperatur-Shiftreaktor und einen nachgeschalteten Methanisierungsreaktor enthält und der Wärmetauscher zur Kühlung des den Dampfreformer verlassenden Reformatgasstromes auf die Eingangstemperatur des Niedertemperatur-Shiftreaktors im Reformatgasstrom zwischen Dampfreformer und Niedertemperatur-Shiftreaktor angeordnet ist.

2. Kombinierte Kraft- Wärmeanlage nach Anspruch 1,
**dadurch gekennzeichnet,**
**daß** als Kohlenwasserstoffe Erdgas eingesetzt wird.

3. Kombinierte Kraft- Wärmeanlage nach Anspruch 1,
**dadurch gekennzeichnet,**
**daß** der Niedertemperatur-Shiftreaktor einen Cu/ZnO-Shiftkatalysator enthält.

4. Kombinierte Kraft- Wärmeanlage nach Anspruch 1,
**dadurch gekennzeichnet,**
**daß** der Methanisierungsreaktor einen Ruthenium enthaltenden Katalysator enthält.

5. Verfahren zum Betreiben der kombinierten Kraft- Wärmeanlage nach Anspruch 1,
**dadurch gekennzeichnet,**
**daß** ein Erdgas/Wasserdampf-Gemisch im Dampfreformer durch Teilreformierung in ein Wasserstoff, Kohlenmonoxid und Methan enthaltendes Reformatgas überführt und dieses Reformatgas nach Abkühlung im Wärmetauscher im Niedertemperatur-Shiftreaktor zur Verminderung des Kohlenmonoxidgehaltes des Reformatgases auf weniger als 0,5 Vol.-% behandelt und anschließend der verbleibende Gehalt des Reformatgases an Kohlenmonoxid im Methanisierungsreaktor auf eine restliche Konzentration von weniger als 100 Vol.-ppm vermindert und das resultierende Produktgas als Brenngas der Brennstoffzellenanlage zugeführt wird, mit deren Anodenabgas der Gasbrenner des Dampfreformers betrieben wird.

6. Verfahren nach Anspruch 5,
**dadurch gekennzeichnet,**
**daß** die Flamme des Gasbrenners mit Hilfe eines Ionisationsdetektors überwacht wird.

7. Verfahren nach Anspruch 6,
**dadurch gekennzeichnet,**
**daß** die Teilreformierung des Erdgas/Wasserdampf-Gemisch im Dampfreformer durch Anpassen der Arbeitstemperatur des Dampfreformers so geführt wird, daß das Reformatgas noch wenigstens 5 bis 10 Vol.-% Methan enthält.

8. Verfahren nach Anspruch 7,
**dadurch gekennzeichnet,**
**daß** der Niedertemperatur-Shiftreaktor mit einer Arbeitstemperatur zwischen 180 und 250 °C betrieben wird.
